# EUROPEAN PATENT APPLICATION

(11) **EP 4 769 670 A1**
(43) Date of publication of application: **01.07.2026**
(21) Application number: 24874929.3
(22) Date of filing: 30.09.2024
(51) Int. Cl.: H01M 10/658, H01M 10/613, H01M 50/242, H01M 50/204

(54) **THERMAL BARRIER FOR SECONDARY BATTERY AND BATTERY PACK COMPRISING SAME**

(30) Priority: 05.10.2023 KR 20230132494
(71) Applicant: LG Energy Solution, Ltd., Seoul 07335 (KR)
(72) Inventor: KANG, Ye Ran, Daejeon 34122 (KR); LEE, Jin Kyu, Daejeon 34122 (KR); PARK, Jun Kyu, Daejeon 34122 (KR); HWANG, Won Pill, Daejeon 34122 (KR); YOON, Doo Han, Daejeon 34122 (KR); KIM, Sun Jae, Daejeon 34122 (KR)
(74) Representative: Plasseraud IP
(86) International application number: PCT/KR2024/014909
(87) International publication number: WO 2025/075373

(57) **Abstract**

Disclosed herein relates to a thermal barrier for a secondary battery, including: a metal enclosure with an interior space; a cooling insulating material provided inside the metal enclosure; a metal support accommodating the metal enclosure; and a packaging pouch enclosing the metal support, wherein the metal support includes a first plate and a second plate, and wherein the metal enclosure is accommodated between the first plate and the second plate.

## Description

### [Technical Field]

The present disclosure relates to a thermal barrier for a secondary battery and a battery pack including the same, and more particularly to a thermal barrier for a secondary battery and a battery pack including the same that can reduce the transition temperature between battery cells by cooling and blocking heat transferred during battery cell ignition, while simultaneously delaying heat transfer.

This application claims the benefit of priority from Korean Patent Application No. 10-2023-0132494, filed on Oct. 5, 2023, the disclosures of which are incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

Meanwhile, the demand for large-capacity battery packs applied to electric vehicles is increasing. Large-capacity battery packs in automobiles are required to increase safety while increasing capacity.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problem]

The first technical challenge that the present disclosure seeks to address is to provide a thermal barrier for secondary batteries that can reduce the transition temperature between battery cells by cooling and blocking the heat transferred during battery cell ignition, while simultaneously delaying the heat transfer.

The second technical challenge that the present disclosure seeks to address is to provide a battery pack that can reduce the transition temperature between battery cells by cooling and blocking the heat transferred during battery cell ignition, while simultaneously delaying the heat transfer.

### [Technical Solution]

To accomplish the first technical challenge, the present disclosure provides a thermal barrier for a secondary battery including: a metal enclosure with an interior space; a cooling insulating material provided inside the metal enclosure; a metal support accommodating the metal enclosure; and a packaging pouch enclosing the metal support, wherein the metal support includes a first plate and a second plate, and wherein the metal enclosure is accommodated between the first plate and the second plate.

In some embodiments, first plate and the second plate may be insert-coupled together on one side of the metal enclosure.

In some embodiments, the first plate and the second plate may be insert-coupled together on the other side of the metal enclosure opposite to the one side.

In some embodiments, the first plate may include: a first panel part, and coupling grooves provided at both ends of the panel part, and wherein the second plate may include: a second panel part, a coupling extension part provided at each end of the second panel part; and an intermediate extension part connecting the second panel part to the coupling extension part, wherein the coupling extension part may be insert-coupled to the coupling groove.

In some embodiments, the first plate may include: edge parts, wherein each of the edge part may be a portion where at least a part of end portion of the first plate is bent, and wherein the coupling groove may be formed at the edge part and may be a groove open to an inward direction of the first panel part.

In some embodiments, the coupling grooves provided at both ends of the first plate may be open in a direction facing each other.

In some embodiments, the intermediate extension part may extend at an angle between the second panel part and the coupling extension part.

In some embodiments, the first plate may include: a first panel part, and coupling grooves provided on one side of the first panel part, and wherein the second plate may include: a second panel part; a coupling extension part provided on one side of the second panel part; and an intermediate extension part connecting the second panel part to the coupling extension part, wherein the coupling extension part may be insert-coupled to the coupling groove.

In some embodiments, the first plate may include: an edge part, wherein the edge part may be a portion where an end portion of the first plate is bent, and wherein the coupling groove may be formed at the edge part and may be a groove open to the inward direction of the first panel part.

In some embodiments, the intermediate extension part may extend at an angle between the second panel part and the coupling extension part.

In some embodiments, the metal enclosure may be made of a copper foil.

In some embodiments, the metal support may be made of a SUS plate.

To accomplish the second technical challenge, the present disclosure provides a battery pack, including: a plurality of battery cells stacked in a first direction; and at least one of the thermal barriers for a secondary battery provided between the plurality of battery cells.

### [Advantageous Effects]

A thermal barrier for a secondary battery, according to embodiments of the present disclosure, may include a cooling insulating material to cool and block heat transferred during battery cell ignition, thereby reducing the transition temperature between battery cells while delaying heat transfer.

In addition, in some embodiments of the thermal barrier for secondary batteries, the metal enclosure can quickly transfer heat to eliminate localized hot spots in the event of high temperatures at any point on the battery module.

In addition, some embodiments of thermal barriers for secondary batteries can protect metal enclosures and cooling insulating materials from external shock and external forces.

Furthermore, in some embodiments of thermal barriers for secondary batteries, externally generated pressure can be distributed and structural strength can be improved. Thus, structural collapse under external pressure can be prevented, resulting in structural stability in response to cell swelling or cell ignition.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description, i.e., unintended effects of practicing the exemplary embodiments of the present disclosure may also be derived from the exemplary embodiments of the present disclosure by one of ordinary skill in the art.

### [Brief Description of the Drawings]

FIG. 1 is a perspective view illustrating a battery assembly according to exemplary embodiments of the present disclosure.
FIG. 2 is a partial perspective view showing a zoomed-in view of a portion of the battery assembly of FIG. 1.
FIG. 3 is a cross-sectional view schematically illustrating a section through the battery assembly along line III-III' of FIG. 2.
FIG. 4 is a perspective view showing the cell case removed from the battery cell.
FIG. 5 illustrates an exterior view of a thermal barrier for a secondary battery according to one embodiment of the present disclosure.
FIG. 6 is a schematic illustration of a cross-sectional view of the secondary thermal barrier of FIG. 5 cut through the secondary thermal barrier of FIG. 5 in a plane perpendicular to a second direction (e.g., in the Y-axis direction).
FIG. 7 is an exploded view of the thermal barrier for the secondary battery of FIG. 5.
FIG. 8 is a drawing illustrating the appearance of the metal support of the thermal barrier for the secondary battery of FIG. 5.
FIG. 9 is a view of the metal support of FIG. 8 in a third direction (e.g., in the Z-axis direction).
FIG. 10 is a zoomed-in view of part A of FIG. 9.
FIG. 11 is a diagram illustrating the appearance of a metal support of a thermal barrier for a secondary battery according to another embodiment of the present disclosure.
FIG. 12 is a zoomed-in view of part B of FIG. 11.
FIG. 13 illustrates the compressive force (F) developed on a metal support when pressure is applied in a first direction (e.g., in the X-axis direction).
FIG. 14 is a perspective view of a typical battery module.
FIG. 15 is a perspective view of a pad included in a typical battery module.
FIG. 16 is a schematic perspective view of a battery pack according to one embodiment of the present disclosure.
FIG. 17 is an exploded perspective view schematically illustrating the configuration of the battery pack of FIG. 16.
FIG. 18 is a perspective view showing the battery cells of FIG. 17 seated in the pack housing.

### [Best Mode for Carrying out the Invention]

Hereinafter, preferred embodiments of the concept of the present disclosure will be described in detail with reference to the accompanying drawings. However, embodiments of the present disclosure may be modified in many other forms, and it should not be construed that the scope of the present disclosure is limited by the embodiments described below. It is preferred that the embodiments of the concept of the present disclosure be construed as being provided to more fully explain the inventive concept to one of ordinary skill in the art. Like designations generally refer to like elements. Furthermore, various elements and areas in the drawings are schematically depicted. Accordingly, the concept of the present disclosure is not limited by the relative sizes or spacing depicted in the accompanying drawings.

Terms such as "first," "second," and the like may be used to describe various components, but the components are not limited by such terms. These terms are used only for the purpose of distinguishing one component from another. For example, a first component may be named a second component, and vice versa, a second component may be named a first component, without departing from the scope of the concept of the present disclosure.

The terms used in this application is used to describe certain embodiments only and is not intended to limit the concept of the present disclosure. Singular expressions include the plural unless the context clearly indicates otherwise. In this application, expressions such as "includes" or "has" are intended to designate the presence of the features, counts, steps, operations, components, parts, or combinations thereof described, and are not to be understood as precluding the possibility of the presence or addition of one or more other features, counts, operations, components, parts, or combinations thereof.

Unless otherwise defined, all terms used herein, including technical and scientific terms, shall have the same meaning as commonly understood by one of ordinary skill in the art to which the concept of the present disclosure belongs. It is further understood that such terms, as commonly used and as defined in dictionaries, are to be construed to have a meaning consistent with their meaning in the context of the art to which they relate, and are not to be construed in an unduly formal sense unless expressly defined herein.

When an embodiment can be instantiated differently, certain processes may be performed in a sequence other than that described. For example, two successively described processes may be performed substantially simultaneously, or in the opposite order from the order described.

In the accompanying drawings, variations in the depicted geometries may be expected, for example, due to manufacturing techniques and/or tolerances. Accordingly, embodiments of the present disclosure should not be construed as limited to the specific geometry of the areas shown herein, and should include, for example, variations in geometry resulting from manufacturing processes. All terms "and/or" used herein include each and every combination of one or more of the components mentioned.

### (First embodiment)

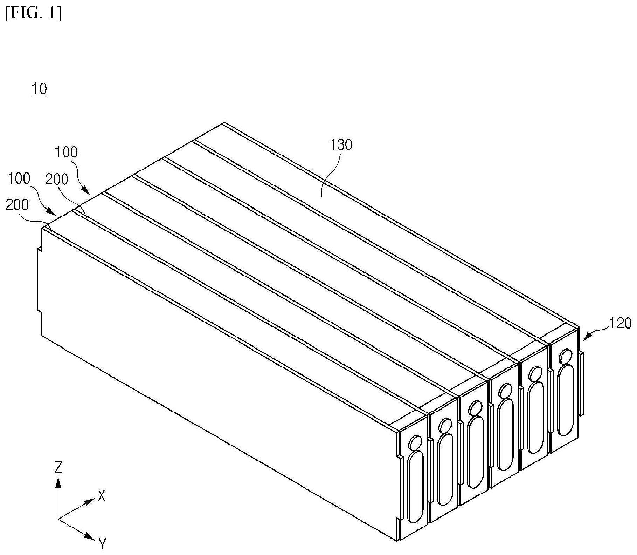

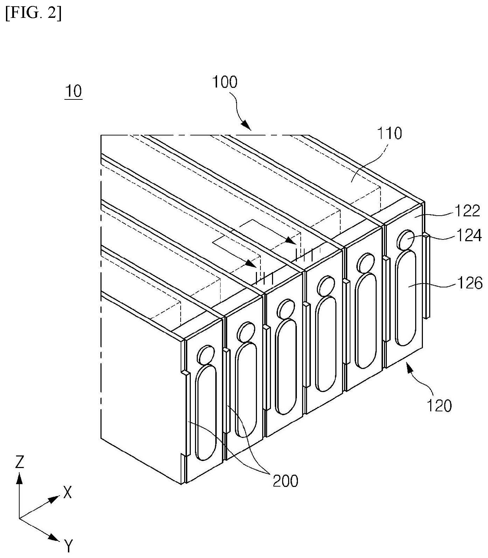

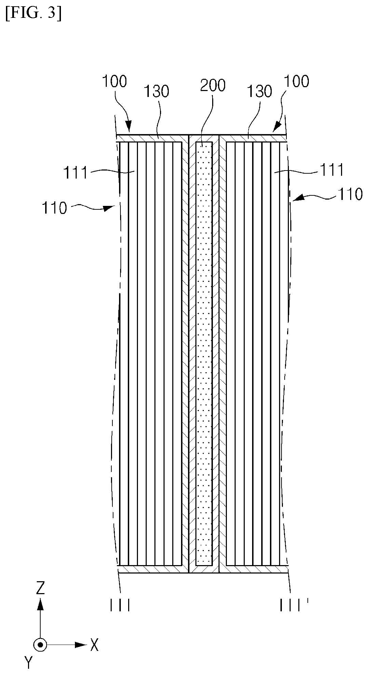

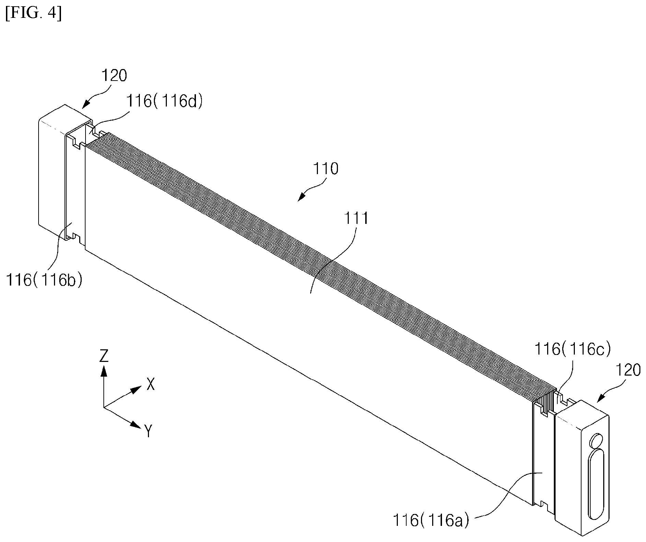

FIG. 1 is a perspective view illustrating a battery assembly 10 according to exemplary embodiments of the present disclosure. FIG. 2 is a partial perspective view showing a zoomed-in view of a portion of the battery assembly 10 of FIG. 1. FIG. 3 is a cross-sectional view schematically illustrating a section through the battery assembly 10 along line III-III' of FIG. 2. FIG. 4 is a perspective view illustrating the removal of the cell case 130 from the battery cell 100.

In FIGS. 1 through 4, the battery assembly 10 is shown as defined in a vertical coordinate system defined by a first direction along the x-axis, a second direction along the y-axis, and a third direction along the z-axis, perpendicular to each other, but the first, second, and third directions need only be perpendicular relative to each other and are not particularly limited.

Referring to FIGS. 1 through 4, the battery assembly 10 may include a plurality of battery cells 100, and a thermal barrier 200 for a secondary battery disposed between the plurality of battery cells 100.

The plurality of battery cells 100 may be arranged in a first direction (e.g., X direction). In the drawings, the battery assembly 10 is illustrated as including six battery cells 100, but is not limited thereto, and the battery assembly 10 may include two or more battery cells 100.

Each battery cell 100 may include an electrode assembly 110, a multifunctional terminal block (MTB) 120, and a cell case 130.

The electrode assembly 110 may include a plurality of unit cells 111. Each of the plurality of unit cells 111 may be an electrode material applied to a metal foil acting as a current collector. In exemplary embodiments, the electrode assembly 110 is a stack-type electrode assembly, and the plurality of unit cells 111 may be stacked on top of each other in a first direction (e.g., X-direction). The electrode assembly 110 comprising the plurality of unit cells 111 may have a generally cuboidal shape. The electrode assembly 110 may have a front and rear surface that are opposed in a second direction (e.g., Y-direction), a first side surface and a second side surface that are opposed in a first direction (e.g., X-direction), and a third side surface and a fourth side surface that are opposed in a third direction (e.g., Z-direction).

Each unit cell 111 may have a thin plate-like body extending in a second direction (e.g., Y-direction). Each of the unit cells 111 may be a positive electrode unit cell 111 or a negative electrode unit cell 111. In some embodiments, the plurality of unit cells 111 may be alternating stacks of one positive electrode unit cell 111 and one negative electrode unit cell 111. The positive electrode unit cells 111 and the negative electrode unit cells 111 may be separated from each other by a separator. In some embodiments, the plurality of unit cells 111 may be a plurality of positive electrode unit cells 111 and a plurality of negative electrode unit cells 111 stacked alternately. The plurality of positive electrode unit cells 111 and the plurality of negative electrode unit cells 111 may be separated from each other by a separator.

The electrode assembly 110 may have electrode leads 116 at both ends in the second direction (e.g., Y-direction). The electrode leads 116 may be electrically connected with electrode tabs of the plurality of unit cells 111. One electrode lead 116 may have one or more electrode tabs connected to it. In some embodiments, two or more electrode tabs may be connected to one electrode lead 116.

In some embodiments, the electrode assembly 110 may have two electrode leads 116 on one side and two electrode leads 116 on the other side. In this case, half of the plurality of unit cells 111 included in the electrode assembly 110 may be coupled to the first electrode lead 116a on one side and coupled to the second electrode lead 116b on the other side. The other half of the plurality of unit cells 111 included in the electrode assembly 110 may be coupled to the third electrode lead 116c on one side and coupled to the fourth electrode lead 116d on the other side. However, the present disclosure is not limited to this.

In some embodiments, the electrode assembly 110 may have one or three or more electrode leads 116 on one side. In some embodiments, the electrode assembly 110 may have one or three or more electrode leads 116 on the other side.

An MTB 120 may be provided at each of the two ends in the second direction (e.g., Y-direction) of the electrode assembly 110. For example, one MTB 120 may be provided at one end in the second direction (e.g., Y-direction) of the electrode assembly 110, and another MTB 120 may be provided at the other end in the second direction (e.g., Y-direction) of the electrode assembly 110. In this case, one of the MTBs 120 provided at the first end and the MTBs 120 provided at the other end may be electrically connected to the positive electrode side of the electrode assembly 110 and the other may be electrically connected to the negative electrode side of the electrode assembly 110. The two MTBs 120 may have substantially the same or similar configurations, with only a difference in electrical polarity.

The MTB 120 may include an MTB housing 122, an electrode terminal part 124 accommodated within the MTB housing 122, and a busbar electrically connecting the electrode terminal part 124 and the electrode leads 116.

The cell case 130 may surround the electrode assembly 110. More specifically, the cell case 130 may cover the side surfaces of the electrode assembly 110 (i.e., the first side surface, the second side surface, the third side surface, and the fourth side surface of the electrode assembly 110). For example, to manufacture the cell case 130, the electrode assembly 110 may be surrounded by a laminated sheet, and then one end of the laminated sheet and the other end of the laminated sheet may be fused together to form a sealed joint part.

Further, the cell case 130 may be connected and fixed to the MTB housing 122. The edge parts of the cell case 130 may surround the side surfaces of the MTB housing 122 and may be fused to the side surfaces of the MTB housing 122. Together, the cell case 130 and the MTB housing 122 may form an accommodation space in which the electrode assembly 110 of the battery cell 100 is accommodated.

In exemplary embodiments, the cell case 130 may be a laminated sheet including one or more resin layers and one or more metal layers. The one or more resin layers and the one or more metal layers may be stacked on each other.

The thermal barrier 200 for the secondary battery may be disposed between two battery cells 100 that are adjacent in a first direction (e.g., the X direction). The two battery cells 100 may be spaced apart in the first direction (e.g., the X direction) by the secondary battery thermal barrier 200. In some embodiments, the thermal barrier 200 for the secondary battery may be attached to the cell case 130 and/or MTB housing 122 of the adjacent battery cell 100.

The thermal barrier 200 for the secondary battery may be configured to cool the adjacent battery cells 100. In some embodiments, the thermal barrier 200 for the secondary battery may be configured to cool the battery cell 100 by absorbing heat from the adjacent battery cell 100. The thermal barrier 200 for the secondary battery may be disposed between adjacent battery cells 100 in a first direction (e.g., X-direction) and may function as a thermal barrier to thermally separate the battery cells 100. Since the secondary battery thermal barrier 200 is disposed between the plurality of battery cells 100, even if any of the plurality of battery cells 100 ignites, the heat transfer between the ignited battery cell 100 and the other battery cells 100 may be blocked or suppressed by the secondary battery thermal barrier 200, thereby preventing the occurrence of a thermal runaway event.

Further, the thermal barrier 200 for the secondary battery may be configured to have a predetermined stiffness due to the internal support structure and/or the material filling the interior, as will be described later, to prevent or inhibit the battery cells 100 from deforming due to swelling. Further, the thermal barrier 200 for the secondary battery may be configured to have a predetermined elasticity due to its internal support structure and/or the material filling its interior, and may be configured to elastically deform in a first direction (e.g., X-direction), which is the direction of the arrangement of the battery cells 100. By elastically deforming in the first direction (e.g., the X direction), the thermal barrier 200 for the secondary battery may function as a cushioning pad against deformation of the battery cells 100 (e.g., deformation of the battery cells 100 due to swelling).

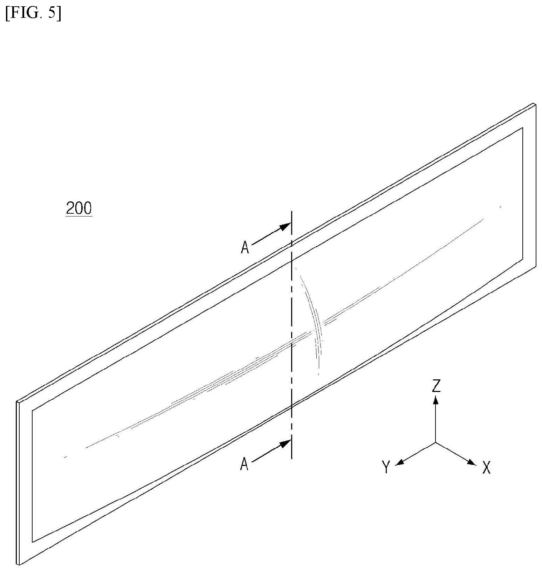

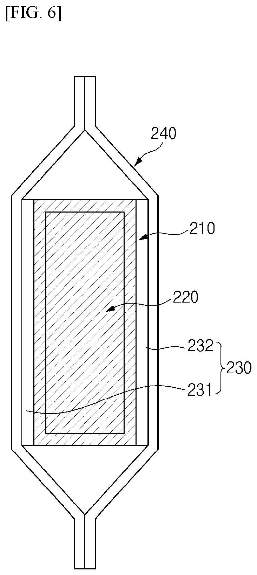

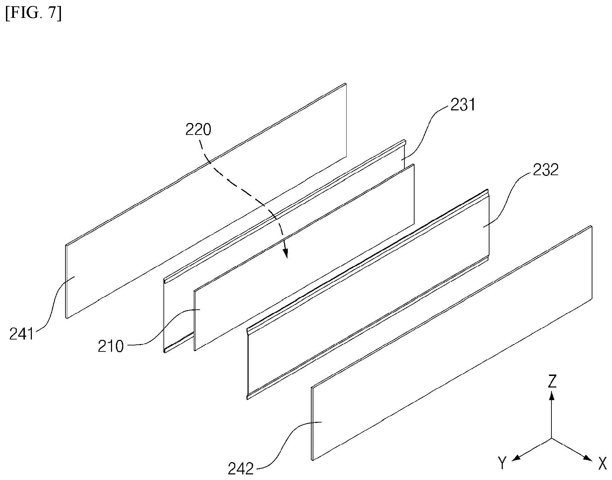

FIG. 5 is an exterior view of the thermal barrier 200 for a secondary battery, and FIG. 6 is a schematic diagram showing a cross-sectional view of the thermal barrier 200 for a secondary battery 200 cut through the thermal barrier 200 for a secondary battery 200 in a plane perpendicular to a second direction (e.g., in the Y-axis direction), i.e., FIG. 6 is a view of the A-A cross-section of FIG. 5. FIG. 7 is an exploded view of the thermal barrier 200 for a secondary battery.

The metal enclosure 210 may be an enclosure for holding and storing the cooling insulating material 220. The metal enclosure 210 may be, for example, a pouch-like enclosure having a space inside. The cooling insulating material 220 may be provided within the space.

In some embodiments, the metal enclosure 210 may have a configuration comprising copper foil. Thus, when a high temperature occurs at a point on the battery module, the high temperature can be quickly conducted across the area of the metal enclosure 210. Thus, the metal enclosure 210 can quickly transfer heat across its entire area to eliminate localized hot spots.

In some embodiments, the perimeter of the metal enclosure 210 may be sealed. Thus, within a certain pressure range, the cooling insulating material 220 provided inside the metal enclosure 210 may not escape to the outside.

The cooling insulating material 220 is provided within the metal enclosure 210 and may have a cooling insulation effect. Thus, the cooling insulating material 220 may cool and block heat transferred during battery cell ignition, thereby reducing the transition temperature between battery cells while delaying heat transfer. Thus, the cooling insulating material 220 may have a substantial thermal barrier effect.

The material of the cooling insulating material 220 is not limited. Since the cooling insulating material 220 is provided within the metal enclosure 210, it may include a liquid material in addition to a solid material.

In some embodiments, the cooling insulating material 220 may include an absorbent member and an endothermic material. In some embodiments, the endothermic material may be absorbed by the absorbent member and may be a material that can phase change with temperature changes.

In some embodiments, the absorbent member may include an absorbent member such as a super absorbent polymer (SAP). The super absorbent resin may be any material known in the art and is not particularly limited thereto. In some embodiments, the super absorbent resin may include polyacrylamide, polyacrylic acid, polymethacrylic acid, polyethylene oxide, polyvinyl alcohol, gelatin, polysaccharide, chitosan, sodium carboxymethylcellulose, or combinations thereof, but the present disclosure is not limited thereto. In some embodiments, the absorbent member 222 may be in the form of a powder, granule, pellet, platelet, slab, or the like, without limitation.

The absorbent member may have a liquid phase endothermic material absorbed therein. In some embodiments, the endothermic material may include a material capable of repeated vaporization and condensation over the operating temperature range of the battery assembly 10 and over a pressure range within and around atmospheric pressure. For example, the endothermic material may include a material that can vaporize or condense in a pressure range of about 1 atmosphere to about 10 atmospheres and a temperature of about 70°C to about 130°C.

In some embodiments, the endothermic material may include water, ethanol, isopropyl alcohol, or the like. In a liquid state, the endothermic material may be absorbed within the absorbent member. The endothermic material may be vaporized by heat transferred from the battery cell 100 through the metal enclosure 210. The vaporized endothermic material may exist in a gaseous state within the metal enclosure 210 and then condense and liquefy as it cools, and may be reabsorbed within the absorbent member. Since the heat transferred from the battery cell 100 is used as a temperature increase and enthalpy of vaporization of the endothermic material, the transfer of the heat to other neighboring battery cells 100 may be reduced or blocked.

In some embodiments, the cooling insulating material 220 may include an insulation precursor. The insulation precursor may be a precursor that expands into a carbon foam upon thermal decomposition to form an insulating layer. The insulation precursor may release extinguishing gases upon heating reaction and form a carbon-structured insulation layer to produce a heat-blocking effect.

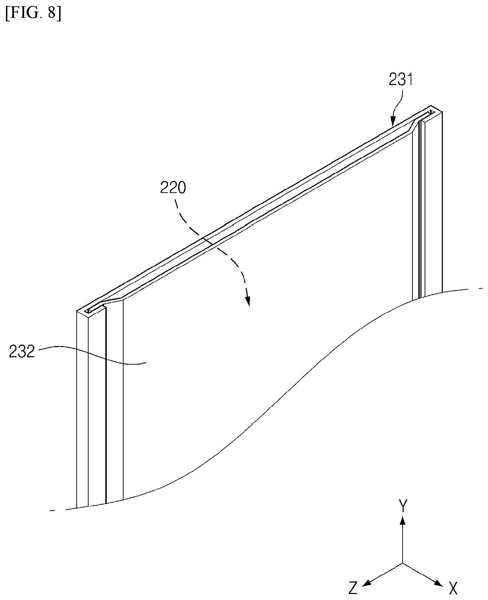

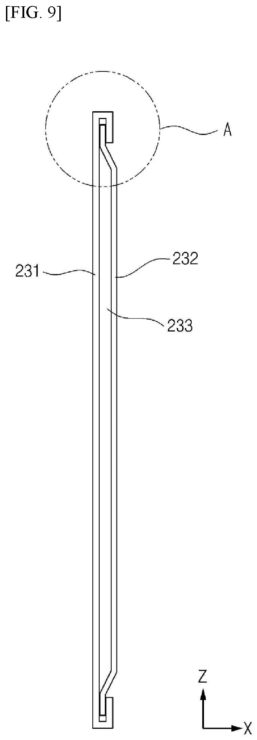

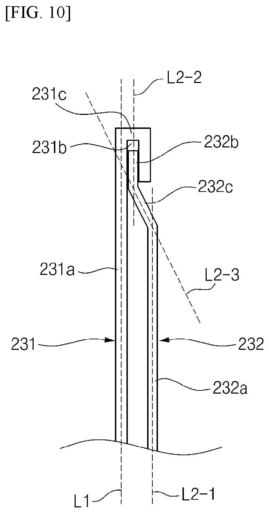

The metal enclosure 210 may be accommodated within the metal support 230. FIG. 8 is a drawing illustrating an exterior view of the metal support 230 of the thermal barrier 200 for a secondary battery, and FIG. 9 is a drawing illustrating the metal support 230 viewed in a second direction (e.g., in the Y-axis direction). FIG. 10 is an enlarged view of portion A of FIG. 9.

The metal support 230 is a member capable of accommodating the metal enclosure 210. The metal support 230 may define the position of the metal enclosure 210 and protect the metal enclosure 210 and the cooling insulating material 220 contained within the metal enclosure 210 from impacts and movements caused by external forces.

The metal support 230 includes a first plate 231 and a second plate 232, a predetermined accommodation space 233 is formed between the first plate 231 and the second plate 232, and the metal enclosure 210 may be accommodated within the accommodation space 233.

Meanwhile, referring again to FIG. 6, the metal support 230 may be provided to be in surface contact with the metal enclosure 210. The metal support 230 may have a sufficient contact area with the metal enclosure 210.

The first plate 231 and second plate 232 comprising the metal support 230 may have a thin plate-like body perpendicular to the first direction (e.g., in the X-axis direction) and extending in the second direction (e.g., in the Y-axis direction).

Referring to FIGS. 8 through 10, the first plate 231 may include a first panel part 231a comprising a thin plate-like body perpendicular to a first direction (e.g., an X-axis direction) and extending in a second direction (e.g., a Y-axis direction).

The first plate 231 may have coupling grooves 231b at both ends in the third direction (e.g., in the Z-axis direction). The coupling groove 231b may be a groove into which at least a portion of the second plate 232 may be inserted.

In some embodiments, the first plate 231 may have edge parts 231c at both ends in the third direction (e.g., in the Z-axis direction). The edge part 231c may be a bent portion of at least a portion of the third direction (e.g., z-axis direction) end of the first plate 231. The edge part 231c may be configured to form a substantially U-shaped cross-sectional shape. In some embodiments, the edge part 231c may have a plane extending perpendicular to the first direction (e.g., X-axis direction).

The coupling groove 231b may be formed by the edge part 231c and may be a groove that opens inwardly of the first panel part 231a.

The second plate 232 may include a second panel part 232a comprising a thin plate-like body perpendicular to the first direction (e.g., the X-axis direction) and extending in the second direction (e.g., in the Y-axis direction).

In some embodiments, the second panel part 232a and the first panel part 231a may be parallel to each other, i.e., referring to FIG. 10, an imaginary line L1 formed by the first panel part 231a and an imaginary line L2-1 formed by the second panel part 232a may be substantially parallel to each other.

The second plate 232 may have coupling extension part 232b at both ends in the third direction (e.g., in the Z-axis direction). The coupling extension part 232b may be end portions of the second plate 232 and be configured to be inserted into the coupling groove 231b.

In some embodiments, the second panel part 232a and the coupling extension part 232b may extend substantially parallel to each other, i.e., referring to FIG. 10, an imaginary line L2-1 formed by the second panel part 232a and an imaginary line L2-2 formed by the coupling extension part 232b may be substantially parallel to each other.

The second plate 232 may include an intermediate extension part 232c connecting between the second panel part 232a and the coupling extension part 232b. The intermediate extension part 232c is located at both ends of the second panel part 232a in a third direction (e.g., in the Z-axis direction).

In some embodiments, the intermediate extension part 232c may extend at an angle between the second panel part 232a and the coupling extension part 232b. That is, referring to FIG. 10, the imaginary line L2-3 formed by the intermediate extension part 232c may be at a predetermined angle in between the imaginary line L2-1 formed by the second panel part 232a and the imaginary line L2-2 formed by the coupling extension part 232b.

The first plate 231 and the second plate 232 may have an arrangement where the first panel part 231a and the second panel part 232a are stacked on top of each other in a first direction (e.g., in the X-axis direction), with the first panel part 231a and the second panel part 232a facing each other.

By providing the second plate 232 with the intermediate extension part 232c, the first panel part 231a of the first plate 231 and the second panel part 232a of the second plate 232 may be spaced apart from each other in a first direction (e.g., in the X-axis direction). Thus, a space may be formed between the first panel part 231a and the second panel part 232a in which the metal enclosure 210 may be accommodated.

In some embodiments, the coupling grooves 231b provided at both ends in the third direction (e.g., in the Z-axis direction) of the first plate 231 may be open in a direction facing each other. Furthermore, the coupling extension part 232b provided at both ends in the third direction (e.g., in the Z-axis direction) of the second plate 232 may be inserted into the coupling grooves 231b respectively.

As described above, the first plate 231 and the second plate 232 may be coupled to each other in a configuration wherein the first plate 231 is provided with coupling grooves 231b at both ends thereof, and the second plate 232 is provided with coupling extension part 232b at both ends thereof, the coupling extension part 232b being inserted within the coupling grooves 231b.

### (Second embodiment)

Meanwhile, in the embodiment described with reference to FIGS. 8 and 9, an embodiment is illustrated in which the coupling groove 231b and the edge part 231c are formed at both ends in the third direction (e.g., in the Z-axis direction) of the first plate 231, and the coupling extension part 232b is formed at both ends in the third direction (e.g., in the Z-axis direction) of the second plate 232, but is not necessarily limited thereto.

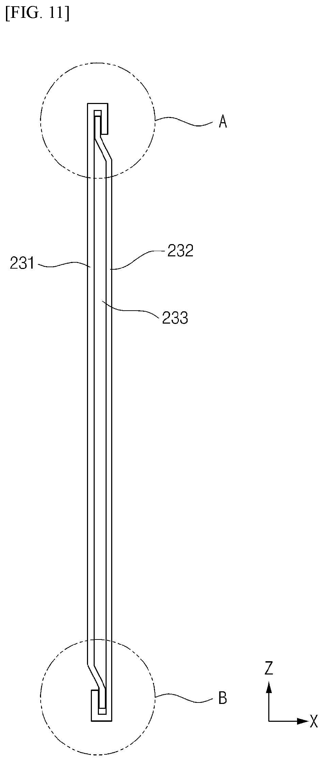

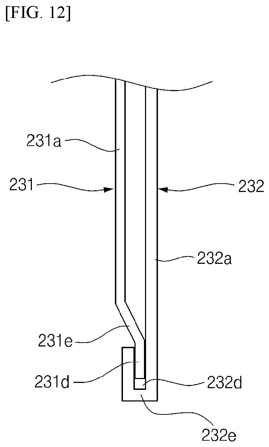

For example, FIG. 11 is a drawing illustrating the appearance of a metal support 230 of a thermal barrier 200 for a secondary battery according to another embodiment of the present disclosure, showing the metal support 230 viewed in a second direction (e.g., in the Y-axis direction), and FIG. 12 is an enlarged view of the B portion of FIG. 11. The portion A of FIG. 11 is the same as shown in FIG. 10.

Referring to FIGS. 10 to 12, a coupling groove 231b and an edge part 231c may be formed at one end in the third direction (e.g., in the Z-axis direction) of the first plate 231 (part A of FIG. 11), and a coupling extension part 231d and an intermediate extension part 231e may be provided at the other end in the third direction (e.g., in the Z-axis direction) of the first plate 231 (part B of FIG. 11). Further, the second plate 232 may be provided with a coupling extension part 232b and an intermediate extension part 232c at one end in the third direction (e.g., the Z-axis direction) (portion A of FIG. 11), corresponding to the configuration of the first plate 231, and a coupling groove 232d and an edge part 232e at the other end in the third direction (e.g., the Z-axis direction) (portion B of FIG. 11) of the second plate 232.

The first plate 231 and second plate 232 may have a rigid structure capable of withstanding swelling and external pressure from neighboring battery cells. In some embodiments, the metal support 230 may be made of aluminum (Al), nickel (Ni), iron (Fe), cobalt (Co), chromium (Cr), manganese (Mn), or an alloy containing one or more of the foregoing.

In some embodiments, the first plate 231 and second plate 232 comprising the metal support 230 may each be a SUS plate composed of SUS. In some embodiments, the first plate 231 and the second plate 232 may each independently have a thickness of about 0.1 mm. In some embodiments, the first plate 231 and the second plate 232 may each independently have a thickness of from about 0.03 mm to about 0.8 mm.

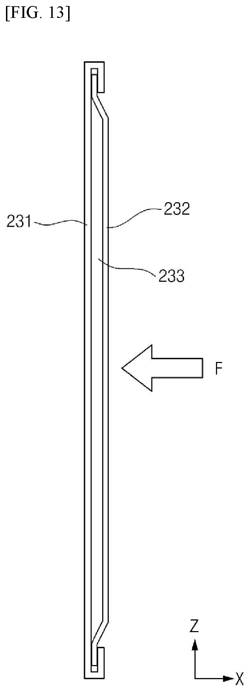

By having an inclined intermediate extension part 232c on the second plate 232 and an inclined intermediate extension part 231e on the first plate 231, the first panel part 231a of the first plate 231 and the second panel part 232a of the second plate 232 can be spaced apart from each other in a first direction (e.g., in the X-axis direction) over their entire area. In other words, the metal support 230 has an accommodation space 233 formed between the first plate 231 and the second plate 232, and the metal enclosure 210 may be accommodated within the accommodation space 233. Thus, as shown in FIG. 13, when pressure is generated in the first direction (e.g., in the X-axis direction), the metal support 230 may be elastically compressed in the first direction (e.g., in the X-axis direction). Thus, it may have the effect of distributing external pressure while simultaneously improving structural strength.

FIG. 13 illustrates a compressive force F generated on a metal support 230 when pressure is applied in a first direction (e.g., in the X-axis direction). The metal support 230 includes a first plate 231 and a second plate 232, wherein the first plate 231 and the second plate 232 are composed of SUS plates, which may have a structure that can be compressed in the first direction (e.g., the X-axis direction). Thus, the metal support 230 may have the effect of distributing external pressure while simultaneously improving structural strength.

Furthermore, the presence of the metal support 230 may prevent the structure of the thermal barrier 200 for the secondary battery from collapsing in the event that the packaging pouch 240 is burned by a flame.

Referring again to FIGS. 5 through 7, the packaging pouch 240 may comprise the exterior of the thermal barrier 200 for the secondary battery according to the embodiments described above. The packaging pouch 240 may surround the metal support 230. The material of the packaging pouch 240 is not limited and may include, for example, a synthetic resin or the like.

The packaging pouch 240 may be a single layer, or may be a laminate comprising two or more layers laminated together. In some embodiments, the packaging pouch 240 may comprise a multi-layer structure with an outermost outer resin layer made of an insulating material such as polyethylene terephthalate (PET) or nylon, a metal layer made of aluminum to maintain mechanical strength and prevent moisture and oxygen penetration, and an inner resin layer made of a polyolefin-based material that is thermally adhesive and acts as a sealant.

The packaging pouch 240 may include a first pouch part 241 and a second pouch part 242, each comprising a side that is in a first direction (e.g., along the X-axis) and a side that is not.

The outer periphery of the first pouch part 241 and the second pouch part 242 may be sealed by at least partially fusing together. Thus, within a certain pressure range, the internal material filled inside the packaging pouch 240 may not leak out.

In the following, comparative examples and examples of the present disclosure will be compared to each other and the effects of examples of the present disclosure will be described.

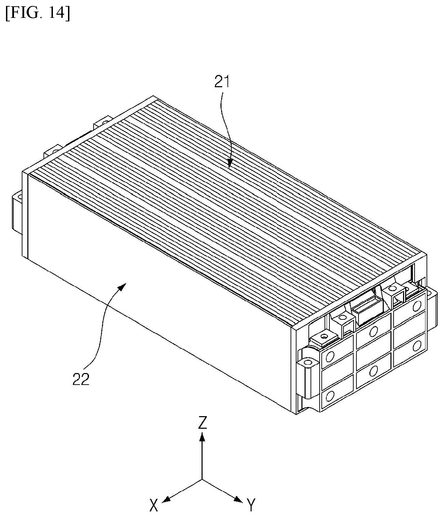

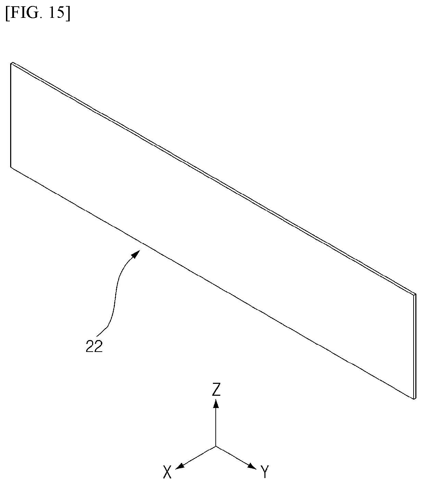

FIG. 14 is a perspective view of a typical battery module, and FIG. 15 is a perspective view of a pad included in a typical battery module.

Referring to FIGS. 14 and 15, a typical battery module includes battery cells 21 and pads 22 applied between the battery cells 21. The battery cells 21 are stacked in a first direction (e.g., in the direction of the X-axis), and the pads 22 may be disposed between and on either side of a plurality of battery cells 21 stacked in the first direction. The pads 22 may comprise a polyurethane-based material or a silicone-based material, the compressive strength of which is adapted to account for cell swelling.

These pads 22 are largely configured to respond to compressive strain and are relatively ineffective at blocking heat transfer. That is, they were ineffective at preventing or delaying the propagation of flame in a short period of time when a thermal event occurred in the battery cell 21.

The thermal barrier 200 for the secondary battery may include a cooling insulating material 220, as previously described, to cool and block heat transferred during battery cell ignition, thereby reducing the transition temperature between battery cells while delaying heat transfer.

Additionally, in some embodiments of the thermal barrier 200 for the secondary battery, the metal enclosure 210 surrounding the cooling insulating material 220 may comprise copper foil. Thus, the metal enclosure 210 can quickly transfer heat to eliminate localized hot spots when high temperatures occur at certain points of the battery module.

Additionally, some embodiments of the thermal barrier 200 for secondary batteries may include a metal support 230 to accommodate the metal enclosure 210, support its shape, and protect the metal enclosure 210 from external shock and external forces.

Furthermore, in some embodiments of the thermal barrier 200 for secondary batteries, the metal support 230 may have a structural strength enhancement effect while also dissipating external pressure. Thus, it may have structural stability in response to swelling of the battery cells or thermal events of the battery cells by preventing structural collapse under external pressure.

### (Third embodiment)

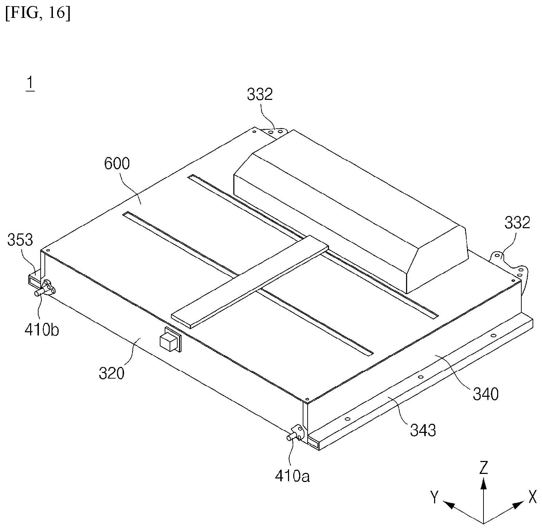

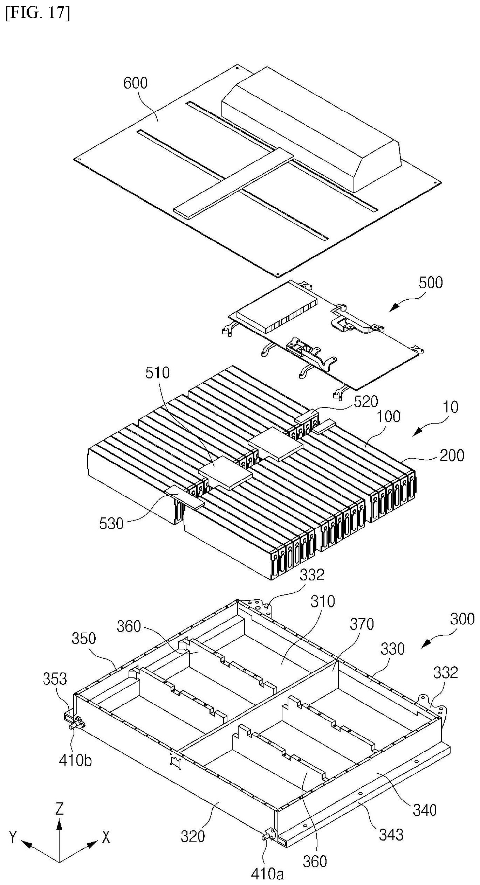

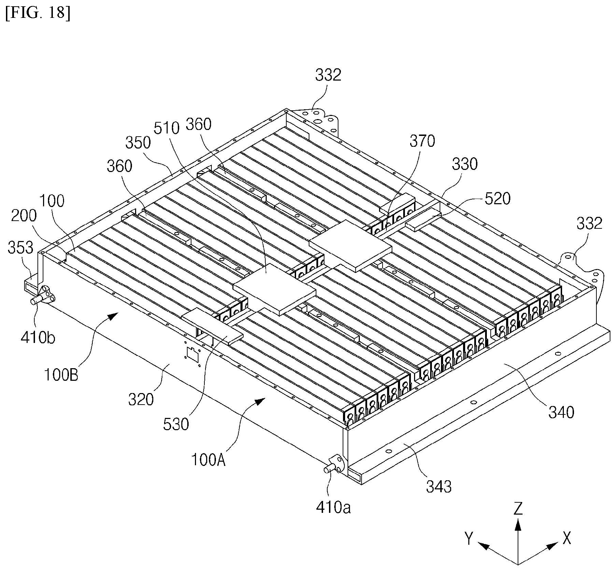

FIG. 16 is a schematic perspective view of a battery pack 1 according to one embodiment of the present disclosure, FIG. 17 is an exploded perspective view schematically illustrating the configuration of the battery pack 1 of FIG. 16, and FIG. 18 is an exploded perspective view illustrating the battery cells 100 of FIG. 17 seated in a pack housing. Referring to FIGS. 16 through 18, a battery pack 1 according to one embodiment of the present disclosure includes a plurality of battery cells 100, an electronics assembly 500, a pack housing 300, and a pack cover 600.

The battery cells 100 are stacked in a first direction (e.g., in the X-axis direction), and cooling pads 200 may be interposed between the battery cells. In some embodiments, the stack of the battery cells 100 and the cooling pads 200 may be stored directly within the pack housing 300 without being stored within another frame. However, those of ordinary skill in the art will understand that various variations are possible with respect to how the battery cells 100 are stored.

For example, the stack of battery cells 100 and the cooling pads 200 may be stored within a module frame to form a battery module, and the battery module may be stored within the pack housing 300. The module frame may be configured in the form of a cuboidal box that wraps around the perimeter of the stack of the battery cells 100 and the cooling pads 200 such that the stack of battery cells 100 and the stack of cooling pads 200 may be held within. The module frame may be made of a metal material having high mechanical rigidity so as to sufficiently protect the battery cells 100 from swelling and external impact.

The electronics assembly 500 may include relay devices, current sensors, fuses, a battery management system (BMS), a manual service disconnector (MSD), and the like. The relay device is a switching component that selectively opens and closes the charge and discharge paths through which current flows, and can stop the flow of charge and discharge current in the event of an abnormality in the battery pack 20. BMS refers to a battery management device that provides overall control of the charging and discharging behavior of the battery cells 100, and may be a component typically included in the battery pack 20. And MSD refers to a system for selectively de-energizing a high-voltage battery by physical means, such as by disconnecting the service plug when necessary.

These electronics assemblies 500, along with the battery cells 100, may be packaged from external exposure by the pack housing 300 and the pack cover 600.

The pack housing 300 may be a structure that provides internal storage for the battery cells 100 and the electronics assembly 200 and is provided with brackets 332 or mounting structures 343, 353 for coupling to the body of a vehicle.

The pack housing 300 may be made of a highly rigid metal material, as it provides mechanical support for the battery modules 100 and the electronics assembly 500 and serves to protect them from external impacts and the like.

The pack housing 300 according to the examples may include a lower frame 310 provided in the form of a wide plate on which the battery cells 100 may be seated, a front frame 320, a rear frame 330, a right side frame 340, and a left side frame 350 coupled vertically along the perimeter of an edge of the lower frame 310 to form a wall. The pack housing 300 may further include a center beam 370 and cross beams 360 to define a space in which the battery cells 100 may be seated. The center beam 370 may be coupled at one end to the front frame 320 and at the other end to the rear frame 330. In some embodiments, the cross beam 360 may be coupled to the center beam 370 at one end and the other end may be coupled to the right side frame 340 or the left side frame 350. In some embodiments, the cross beam 360 may extend across the center beam 370 and may be coupled at one end to the right side frame 340 and at the other end to the left side frame 350.

In some embodiments, the lower frame 310, the front frame 320, the rear frame 330, the right side frame 340, the left side frame 350, and the cross beam 360 may each be an aluminum extruded structure, and the pack housing 300 may be formed by welding and/or bolting the frames together.

For example, by fabricating the frames by extruding aluminum with a mixture of internal hollow spaces and ribs and welding them together to form the pack housing 300, the weight of the pack housing 300 may be reduced and the mechanical stiffness may be more reliable than required.

In some embodiments, a heat sink may be further provided within the pack housing 300. The heat sink may be arranged in the form of a plate with internal flow paths to absorb and dissipate heat from other objects by thermal contact. In some embodiments, the lower frame 310 may include an inlet port 410a through which coolant may enter, an outlet port 410b through which coolant may exit, and a coolant channel through which coolant may flow.

The battery cells 100 may be electrically connected by inter-busbars 510, 520, 530. The inter-busbars may include a first inter-busbar 510 that electrically connects battery modules disposed 2x2 along a first direction (e.g., along an X-axis direction) and a second direction (e.g., along a Y-axis direction). In some embodiments, the first inter-busbar 510 may be provided at an intersection of the center beam 370 and the cross beam 360.

The inter-busbar may also include a second inter-busbar 520 that electrically connects the electrically connected battery cells 100 to an external load or charging system. The second inter-busbar 520 need not be directly connected to the external load or charging system, and may be connected to the external load or charging system via the electronics assembly 500.

The battery cells 100 may include a first group of battery cells 100A positioned on one side with respect to the center beam 370 and a second group of battery cells 100B positioned on the other side. The inter-busbars may include a third inter-busbar 530 electrically connecting the first group of battery cells 100A and the second group of battery cells 100B.

Although examples of the present disclosure have been described in detail above, one of ordinary skill in the art to which the disclosure belongs will be able to make many modifications to the disclosure without departing from the spirit and scope of the disclosure as defined in the appended claims. Accordingly, future modifications of the examples of the disclosure will not depart from the art of the disclosure.

### [Description of Reference Numerals]

1: BATTERY PACK
10: BATTERY ASSEMBLY
100: BATTERY CELL
110: ELECTRODE ASSEMBLY
111: UNIT CELL
120: MULTIFUNCTIONAL TERMINAL BLOCK
122: MTB HOUSING
124: ELECTRODE TERMINAL PART
130: CELL CASE
200: THERMAL BARRIER FOR SECONDARY BATTERY
210: METAL ENCLOSURE
220: COOLING INSULATING MATERIAL
230: METAL SUPPORT
231: FIRST PLATE
231a: FIRST PANEL PART
231b: COUPLING GROOVE
231c: EDGE PART
231d: COUPLING EXTENSION PART
231e: INTERMEDIATE EXTENSION PART
232: SECOND PLATE
232a: SECOND PANEL PART
232b: COUPLING EXTENSION PART
232c: INTERMEDIATE EXTENSION PART
232d: COUPLING GROOVE
232e: EDGE PART
233: ACCOMMODATION SPACE
240: PACKAGING POUCH
241: FIRST POUCH PART
242: SECOND POUCH PART

## Claims

1. A thermal barrier for a secondary battery, comprising:
a metal enclosure with an interior space;
a cooling insulating material provided inside the metal enclosure;
a metal support accommodating the metal enclosure; and
a packaging pouch enclosing the metal support,
wherein the metal support includes a first plate and a second plate, and
wherein the metal enclosure is accommodated between the first plate and the second plate.

2. The thermal barrier for a secondary battery of claim 1, wherein:
the first plate and the second plate are insert-coupled together on one side of the metal enclosure.

3. The thermal barrier for a secondary battery of claim 2, wherein
the first plate and the second plate are insert-coupled together on the other side of the metal enclosure opposite to the one side.

4. The thermal barrier for a secondary battery of claim 1, wherein the first plate comprises:
a first panel part, and coupling grooves provided at both ends of the first panel part, and
wherein the second plate comprises:
a second panel part,
a coupling extension part provided at each end of the second panel part; and
an intermediate extension part connecting the second panel part to the coupling extension part,
wherein the coupling extension part is insert-coupled to the coupling groove.

5. The thermal barrier for a secondary battery of claim 4, wherein the first plate comprises:
edge parts,
wherein each of the edge part is a portion where at least a part of end portion of the first plate is bent, and
wherein the coupling groove is formed at the edge part and is a groove open to an inward direction of the first panel part.

6. The thermal barrier for a secondary battery of claim 5, wherein:
the coupling grooves provided at both ends of the first plate are open in a direction facing each other.

7. The thermal barrier for a secondary battery of claim 4, wherein:
the intermediate extension part extends at an angle between the second panel part and the coupling extension part.

8. The thermal barrier for a secondary battery of claim 1, wherein the first plate comprises:
a first panel part, and coupling grooves provided on one side of the first panel part, and
wherein the second plate comprises:
a second panel part;
a coupling extension part provided on one side of the second panel part; and
an intermediate extension part connecting the second panel part to the coupling extension part,
wherein the coupling extension part is insert-coupled to the coupling groove.

9. The thermal barrier for a secondary battery of claim 8, wherein the first plate comprises:
an edge part,
wherein the edge part is a portion where an end portion of the first plate is bent, and
wherein the coupling groove is formed at the edge part and is a groove open to the inward direction of the first panel part.

10. The thermal barrier for a secondary battery of claim 8, wherein:
the intermediate extension part extends at an angle between the second panel part and the coupling extension part.

11. The thermal barrier for a secondary battery of claim 1, wherein:
the metal enclosure is made of a copper foil.

12. The thermal barrier for a secondary battery of claim 1, wherein
the metal support is made of a SUS plate.

13. A battery pack, comprising:
a plurality of battery cells stacked in a first direction; and
at least one of the thermal barriers for a secondary battery of claim 1 provided between the plurality of battery cells.
